# EUROPEAN PATENT SPECIFICATION

(11) **EP 1 404 033 B1**
(45) Date of publication and mention of the grant of the patent: **14.02.2018**
(21) Application number: 03292331.0
(22) Date of filing: 23.09.2003
(51) Int. Cl.: H04B 7/08, H04B 7/185

(54) **ADAPTATIVE ANTENNA ARRAY RECEIVER AND PROCESSOR**
ADAPTIVE GRUPPENANTENNENEMPFÄNGER UND PROZESSOREN
RÉCEPTEUR À ANTENNE ADAPTATIVE EN RÉSEAU ET PROCESSEUR

(30) Priority: 30.09.2002 US 259784
(43) Date of publication of application: 31.03.2004
(73) Proprietor: MITAC International Corporation, Taoyuan City 333 (TW)
(72) Inventor: Lorenz, Robert Thales Intellectual Property, 94117 Arcueil cedex (FR)
(74) Representative: Hoefer & Partner Patentanwälte mbB

(56) References cited:
- WO-A1-01/45302
- GB-A- 2 367 199
- US-A- 4 809 005
- US-A- 5 907 809
- US-A- 6 166 690
- Charles C. Counselman III: "Array Antennas for DGPS", IEEE , 1 December 1998 (1998-12-01), pages 352-357, XP002630128, Retrieved from the Internet: URL:http://ieeexplore.ieee.org/stamp/stamp .jsp?arnumber=00670136 [retrieved on 2011-03-25]

## Description

### APPENDIX

The attached appendix contains an article entitled: "Robust Beamforming in GPS Arrays" by Robert G. Lorenz and Stephen P. Boyd, ION National Technical Meeting, January 28-30, 2002, San Diego, CA. The contents of this article, omitted from the Detailed Description below for the sake of brevity, include very detailed analyses of some of the features of the present invention.

### BACKGROUND OF THE INVENTION

### Field of the Invention

The present invention relates to processing signals, such as GPS signals, received by a plurality of antenna elements for the purpose of rejecting interference from undesired signals.

### Description of the Related Art

Multi-path and interference frequently limit the performance and availability of carrier phase-based relative positioning and precision navigation techniques. There are a number of ways of rejecting multipath and, to a lesser extent, interference. When the earth below the antenna contains appreciable moisture, it becomes a good reflector of L-band RF energy. Reflections from the ground below the antenna are commonly the largest source of multipath in GPS survey systems.

A RHCP (Rights Hand Circularly Polarized) wave, incident at an arbitrary angle on a dielectric discontinuity, can be resolved into two linearly polarized parts, namely, a transverse magnetic (TM) component and a transverse electric (TE) component. The reflection coefficients for each of these components are generally different. However, the reflected signal will be elliptically polarized with roughly a left hand circular polarization, i.e., the opposite of the incident wave.

An antenna element designed to receive a RHCP wave from above the horizon, such as a turnstile antenna, will generally have a strong response to left-hand elliptically polarized radiation arriving from below the horizon. A ground plane or slow-wave structure, such as a choke-ring, is typically employed to shield the antenna element from reflections arriving from below the horizon.

A high degree of isolation typically requires a physically large structure. For example, in U.S. Patent No. 4,647,942, entitled "Circularly Polarized Antenna for Satellite Positioning Systems," Counselman and Steinbrecher describe the use of a circularly polarized antenna for satellite position systems making use of a turnstile antenna element, namely a quadrifilar combiner in conjunction with 4 monopoles equally spaced in a horizontal plane above a large ground plane structure. While the antenna is reported to have excellent multi-path performance, the use of a large ground plane structure limits its utility for man-portable systems. For methods that attempt to control the radiation pattern of an antenna using choke rings (slow-wave structures) or ground planes, there is normally a tradeoff between physical size and efficacy.

Because the GPS signals are bandlimited, multi-path mitigation techniques that discriminate between the direct signal path and reflections based on differences in time-of-arrival are of little utility in mitigating close in multi-path.

U.S. Patent No. 4,809,005, entitled "Multi-Antenna GPS Receiver for Seismic Survey Vessels" by Counselman introduces the idea of an antenna array system making use of post-correlation beamforming, that is, controlling the radiation pattern of a collection of antennas after each of them has performed satellite specific operations on the GPS signals. In this and subsequent patents, Counselman does not teach how are the outputs of the antennas combined.

The idea of minimizing the weighted power output from an antenna array was first described by J. Capon in an article entitled: "High Frequency-wave Number Spectrum Analysis", Proceedings of the IEEE, Volume 57, Number 8, August 1969, Pages 1408-1418. While the method described therein may be viewed as optimal, its performance can degrade to arbitrarily poor levels in the presence of uncertainty in the array response, also known as an array manifold.

In his paper entitled "Array Antennas for DGPS", Proceedings of the IEEE 1998 Position Location and Navigation Symposium, Palm Springs, California, April 22, 1998, Pages 352-357, Counselman describes an antenna array making use of three turnstile antennas whose outputs are combined with fixed weights so that the antenna's amplitude response is approximately the Heaviside step function of the received signals elevation. The described antenna array has three vertically stacked turnstile antennas. Again, this antenna array is an excellent compromise. However, due to the fixed weights, the antenna system cannot adapt to additional knowledge.

In the paper entitled "GPS Code and Carrier Multipath Mitigation Using a Multi-Antenna System," IEEE Transactions on Aerospace and Electronic Systems, Volume. 37, Number 1, January 2001, Pages 183-195, Ray et al. describe a system that makes use of an antenna array in which antenna elements are oriented circularly around a centrally located antenna. The lack of vertical aperture limits the performance of this method. WO 99/17466 discloses an apparatus and method for using multiple receive antennas in a satellite communication system receiver to mitigate the effects of specular reflection of a received signal. The system includes first and second antennas, for receiving a satellite communication signal along first and second direct and specular propagation paths, respectively, and a digital maximal ration combiner for combining the signals so as to maximize the signal-to-noise of the resultant combined signal.

In the present invention, the antennas forming the array, such as turnstile antennas, are not isolated from reflected signals arriving from below the horizon. Instead, a linear combination of the turnstile antenna outputs having a small response in the direction of the reflected signal is chosen. With such an antenna array arrangement, the usual trade-off between antenna size and multipath performance need not apply.

### SUMMARY OF THE INVENTION

The present invention includes an antenna array for mitigating multi-path based on angle-of-arrival differences. It also includes a signal processor to process signal processing algorithms to combine the output of the array elements to minimize the effect of interferences and multi-path.

The combining technique explicitly takes into account variation or uncertainty in the assumed array response. Sources of this uncertainty include imprecise knowledge of the angle of arrival and uncertainty in the array manifold. In one example embodiment of the present invention, uncertainty in the array manifold is modeled explicitly via an uncertainty ellipsoid that gives the possible values of the array for a particular look direction. Weights are chosen to minimize the total weighted power output of the array, subject to the constraint that the gain exceeds unity for all array responses in this uncertainty ellipsoid. Hence, the present invention can guarantee performance of a robust method in the presence of uncertainties. The present invention extends naturally to the case where the aggregate uncertainty arises from more than one component in the signal path, e.g., the array manifold, the radio frequency (RF) electronics, etc.

It is therefore an object of the present invention to provide a signal processing method and apparatus having an accurate response to the desired received signal in the presence of multi-path or interferences.

It is another object of the present invention to provide a method and apparatus employing a plurality of antenna elements for mitigating the effect of undesired signals and interference.

Briefly, these and other objectives are accomplished by providing a method and apparatus to process a plurality of signals received from individual antenna elements and to combine the processed outputs to reduce the effect of undesired signals.

### BRIEF DESCRIPTION OF THE DRAWINGS

Further objects and advantages of the present invention and will become apparent from the following detailed description and drawings in which:
**FIG. 1** is a block diagram of a system in accordance with an example embodiment of the present invention consisting of an antenna array, a plurality of GPS receivers, and a timebase common to all of the GPS receivers.
**FIG. 2** is a drawing showing an earlier disadvantageous GPS beamforming system.
**FIG. 3** is a drawing showing an example embodiment in accordance with the present invention.
**FIG. 4** is a schematic drawing showing a turnstile antenna element.
**FIG. 5** is a drawing showing a wire model of an antenna used in conjunction with an example embodiment of the present invention.

### DETAILED DESCRIPTION

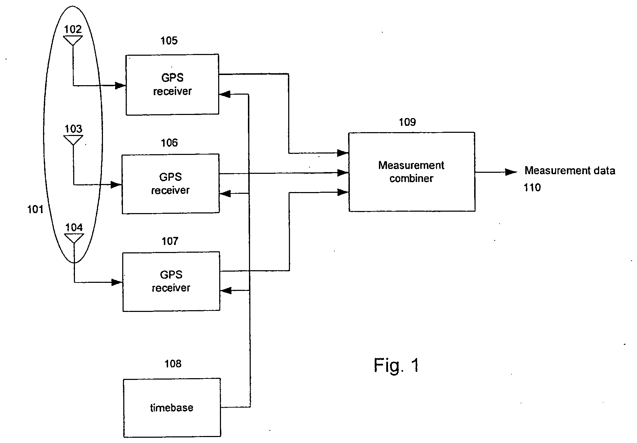

Referring to FIG. 1, the system embodying the present invention is shown. Signals are received at an antenna array 101 consisting of a plurality of antenna elements 102, 103, and 104. The outputs of antenna elements 102, 103, and 104 are respectively connected to a plurality of receivers (such as GPS receivers) 105-107. The GPS receivers 105-107 are additionally connected to a common timebase 108. The stability of the timebase 108 is not critical. For example, the timebase 108 may comprise a temperature compensated crystal oscillator.

Antenna elements 102, 103, and 104 of array 101 are, for example, identical turnstile elements arranged in a vertical collinear fashion. The turnstile antennas 102, 103, and 104 are optimally spaced apart at approximately a 1/2 of a wavelength at the highest frequency of use. A spacing of greater than a half of a wavelength creates ambiguity in the received number of carrier cycles. Closer spacing reduces the effectiveness of the antenna and increase the coupling between antennas. The spacing between turnstile antenna elements in an example embodiment of the present invention is 3 inches, which corresponds to approximately 1/3 of a wavelength at the GPS L1 frequency. This topology is well suited for kinematic surveying applications. The array phase center is taken to be the phase center of the center element. Unlike an array in a horizontal plane, a vertically stacked array affords strong discrimination between signals arriving from above and below the horizon due to its large vertical aperture.

The outputs of receivers 105-107 are connected to a measurement combiner 109. The function of the measurement combiner 109 is to combine the outputs of receivers 105-107 to produce measurement data 110 of aspects of the signal characteristics such as pseudorange and carrier phase. For exemplary purposes, three antenna elements and multipliers have been shown. However, the present invention is not limited thereto and a different number of antenna elements may be employed. Generally speaking, increasing the number of antenna elements increases the cost, the power consumption, and performance of the system.

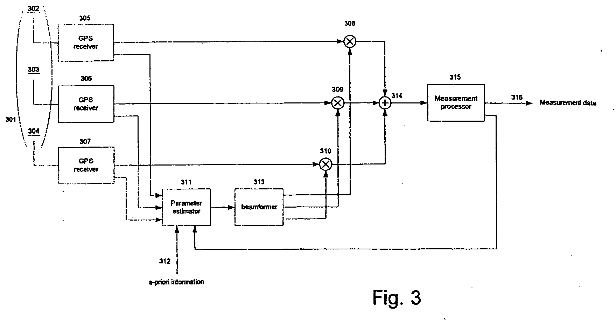

In the illustrative example of the present invention, three separate receivers are used along with a common timebase. Alternately, a single receiver containing multiple receiver sections may be employed. In addition, the relative gains of the different receiver sections must be estimated. This matter will be addressed in the discussion of Fig. 3.

In another example, the antenna elements are be connected to a multiplexer that selectively connects one of the antenna elements to a single receiver. In this case, the receiver processing acts in synchronism with the multiplexer to allow a single receiver to process signals from all of the antenna elements. An advantage of this approach is that the complexity of this solution is lower. In addition, signals from each of the antenna elements are processed by a single receiver and hence are not subject to different gains or phases. This approach incurs a loss of sensitivity relative to the multiple receiver architecture.

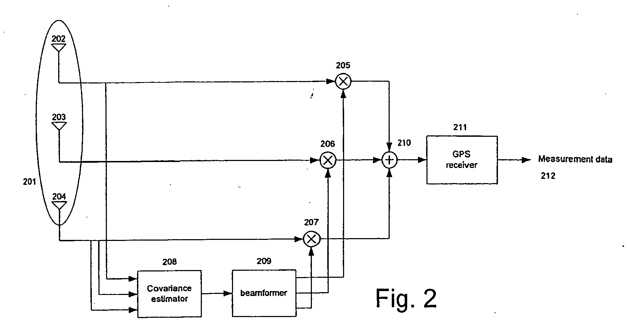

In Fig. 2, a controlled radiation pattern antenna typical of an earlier disadvantageous GPS systems employing beamforming is shown. A receiving antenna array 201 comprises antenna elements 202, 203, and 204 respectively. The antenna elements 202-204 are connected to a beamformer 209 via a covariance estimator 208 and to multipliers 205, 206, and 207 respectively. An estimate of the covariance of the array element outputs of array 201 is computed in covariance estimator 208. Beamformer 209 uses this covariance estimate and computes complex weights that are applied to multipliers 205, 206, and 207 respectively. The outputs of multipliers 205, 206, and 207 are added together in an adder 210. The output of the adder 210 is applied to a GPS receiver 211 that outputs measurement data 212. The reception pattern of the antenna array may be controlled in this manner to mitigate the effect of strong interfering signals.

While this approach works well at mitigating the effect of strong interfering sources, it is not well suited for precise relative positioning systems for two reasons. First, this system usually has high power consumption and a high cost. The increased cost is due to the fact that traditionally it has been expensive to precisely weight radio frequency (RF) signals. Second, a single set of weights is used for the combining of the outputs of the antenna elements. As a result, the weights used represent a compromise that is used for all satellites.

What differentiates the present invention from previous approaches to beam forming is that the complex amplitudes are combined after correlating with locally generated replicas of the pseudorandom code and carrier for each received satellite signal. The correlation process is a linear, time-varying operation; hence, the reception pattern of the antenna array may be controlled by forming combinations of the correlation coefficients. One significant advantage of the present invention is that the antenna response can be adjusted on a satellite-by-satellite basis. This allows the system to choose an optimal radiation pattern for each satellite instead of a compromise for all satellites. Since the weights are applied after correlation, the multipliers may be implemented in software and do not require additional hardware.

FIG. 3 shows the architecture of the post-correlation beamformer that constitutes a portion of the example embodiment of the present invention. For clarity, a single beamformer is shown. In practice, separate beamformer weight vectors may be used for each satellite. Antenna array 301 comprises a plurality of antenna elements numbered 302, 303, and 304. Antenna elements 302, 303, and 304 are respectively connected to an equal number of GPS receivers 305, 306, and 307.

Parameter estimator 311 makes use of inputs 312 that provide a-priori information, outputs of the GPS receivers 305, 306, and 307, and outputs of the measurement processor 315. A-priori information 312 may consist of the array manifold and its uncertainty, antenna orientation, and receiver gains. The outputs of the GPS receivers includes pseudoranges, carrier phases, correlation coefficients, and optionally pre-correlation sample data. The outputs of parameter estimator 311 comprise information about the orientation of the antenna array 301, the relative gains of the GPS receive paths, and an estimate of the desired covariance measurement. As it is desirable to minimize the number of estimated parameters, one of the receiver gains may be considered to be unity. Parameter estimator 311 makes use of nonlinear estimation techniques, for example. As some of the parameters are well-modeled as evolving according to a linear stochastic model, the parameter estimator 311 may be implemented as an extended Kalman filter.

The aggregate uncertainty in the response of the antenna array and the receiver paths for each satellite is the set of possible values of the element-wise product of the array manifold and the receiver gains, wherein each of the above quantities can take on any value in their uncertainty region. A further output of the parameter estimator 311 comprises an outer approximation of the uncertainty region of the element-wise product of the array manifold and the receiver gains. In this example embodiment of the present invention, an ellipsoidal approximation is used. The output of the parameter estimator 311 is applied to a beamformer 313.

Two different covariance estimates are of utility. In the presence of strong interfering signals that are uncorrelated with the received GPS signal, a covariance estimate based on the intermediate frequency (IF) samples of each GPS receiver is computed. In the case where the undesired signal is correlated with the desired signal, such as multipath, samples of the correlation coefficients for each satellite, computed in receivers 302, 303 and 304, are used to estimate the covariance for each satellite's beamformer computation.

The beamformer 313 weight vector is chosen to minimize the time-averaged weighted power output of the array subject to the constraint that the real part of the gain in the direction of the satellite is greater than unity for all possible values of the array manifold or receiver gain in accordance with the respective uncertainty descriptions. Mathematically, the time averaged power out of the array is given by the quantity *w*Rw*, where *w* is the beamformer weight vector, (·)* denotes the conjugate transpose, and R corresponds to the estimate of the covariance. The beamformer 313 may use regularization methods or may make use of the fact that if the aggregate uncertainty description is an ellipsoid, the beamformer weight vector can be efficiently calculated using convex optimization techniques.

Outputs of receivers 305-307 are also respectively inputted to multipliers 308-310. Outputs of the beamformer 313 are respectively inputted to multipliers 308-310. The outputs of multipliers 308-310 are inputted to an adder 314 whose output is inputted to a measurement processor 315. The measurement processor 315 outputs measurement data 316 and also feeds back an output to the parameter estimator 311.

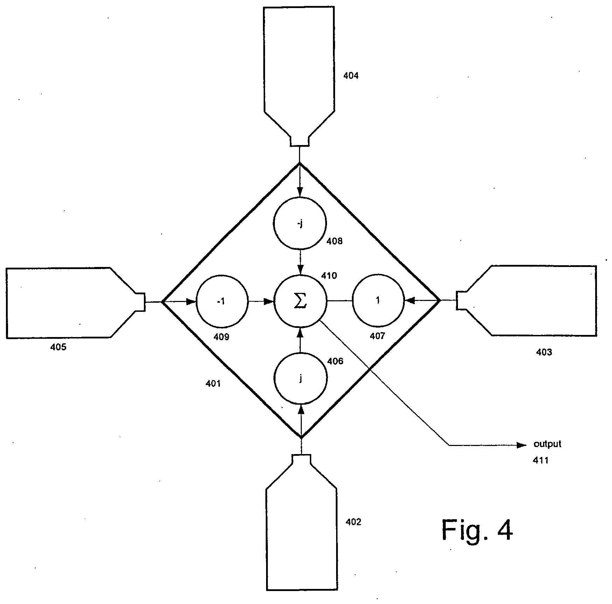

The operation of the turnstile antenna element can be better understood by referring to Fig. 4. Each turnstile antenna element consists of a quadrifilar combiner 401 and four identical monopoles numbered 402, 403, 404, and 405.

Quadrifilar combiner 401 may consist of a stripline circuit. Commercially available quadrifilar combiners have a loss of approximately 1/2 dB. The magnitudes of the outputs match within a few percent and the phases, relative to ideal quadrature, to within ±5°.

The monopoles radiate from the quadrifilar combiner at equally spaced angles in a nominally horizontal plane.

When the elements are infinitesimal dipoles, the magnitudes are equal, and the phases are in quadrature, the antenna produces a circular pattern in the plane on the turnstile antenna elements. In the preferred embodiment, the length, taper, and diameter of the antenna elements 402-405 were chosen to match the input impedance of the elements to 50Ω, the characteristic impedance of the quad hybrid. As a result, the pattern of the prototype antenna is slightly different due to the geometry of the elements and the non-ideal performance of the quad hybrid. The deviation from the idealized response creates no significant problems.

The GPS satellites transmit RHCP radiation. An electric field vector of constant length characterizes RHCP radiation that rotates around a circular path. If the wave is traveling toward the observer and the vector rotates counterclockwise, it is right-hand polarized. The operation of the quadrifilar combiner can be understood in terms of the four inputs being multiplied by weight factors 406, 407, 408, and 409 and summed in a summer 410 having an output 411. The phasing is chosen such that the outputs of the dipoles add constructively when illuminated with RHCP radiation from the zenith. The weights shown correspond to those in the antenna when viewed from above.

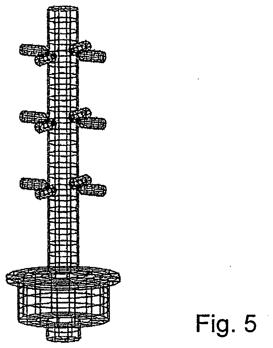

Fig. 5 shows a simulation model of an antenna. Both the array manifold and the input impedances of the antenna array elements may be simulated with the Numerical Electromagnetics Code(NEC), version 4. It is possible to design the shape and size of the monopole elements so as to approximately match the characteristic impedance of the quadrifilar combiners.

The wire grid model used in the NEC simulation consists of approximately 2000 segments. The diameter of each wire element has approximately the same surface area as the portion of the antenna it is being used to model. Though the turnstile antenna elements are identical, the responses of the turnstile antenna elements to plane wave excitation differ as the array manifold and the impedances presented to the quadrifilar combiners are strongly affected by coupling between elements and other parts of the antenna structure.

Various changes may be made in the structure and embodiments shown herein without departing from the concept of the present invention. Further, features of the embodiments shown in the various figures may be employed with the embodiments shown in the other figures. Therefore, the scope of the present invention is to be determined by the terminology of the following claims and the legal equivalents thereof.

## Claims

1. An apparatus for processing signals from a plurality of signal sources, said apparatus comprising:
an antenna array (101) including a plurality of vertically-stacked elements (102, 103, 104) to receive the signals from the plurality of signal sources;
a plurality of receivers (105 - 107), outputs of each of said plurality of vertically-stacked elements (102, 103, 104) being respectively connected to a separate input of said plurality of receivers (105-107); **characterized by**
a combiner (109) connected to outputs of said plurality of receivers (105 - 107) to combine signals being correlated with locally generated replicas of the pseudorandom code and carrier using a plurality of combining rules, each of said plurality of combining rules respectively corresponding to one of the plurality of signal sources.

2. The apparatus of claim 1, wherein said combiner (109 combines said outputs of said plurality of receivers (105 - 107) in accordance with minimizing a weighted power output of said antenna array (101) subject to a minimum gain constraint in a direction of each of the plurality of signal sources.

3. The apparatus of claim 1, wherein a gain in said direction of one of the plurality of signal sources transmitting a corresponding signal includes an effect of uncertainty in a response of said antenna array (101).

4. The apparatus of claim 1, wherein said antenna array (101) comprises a plurality of vertically stacked turnstile antennas.

5. The apparatus of claim 1, wherein said plurality of' signal sources comprises a plurality of satellites respectively transmitting satellite signals.

6. The apparatus of claim 5, wherein the satellite signals comprise satellite positioning signals and wherein said plurality of receivers (105 - 107) comprise a plurality of satellite positioning signal receivers and wherein said plurality of digital received signals comprise digital received satellite positioning signals and wherein said data generated by said measurement combiner comprises position data.

7. The apparatus of claim 6, wherein the satellite signals comprise GPS satellite positioning signals and wherein said plurality of satellite signal receivers comprise a plurality of GPS satellite positioning signal receivers and wherein said plurality of digital received satellite signals comprise digital received GPS satellite positioning signals and wherein said data generated by said measurement combiner comprises GPS position data.

8. An apparatus for processing signals from a plurality of signal sources, said apparatus comprising:
an antenna array (101) including a plurality of vertically-stacked elements (102, 103, 104);
a plurality of receivers (105 - 107), outputs of each of said plurality of vertically-stacked elements (102, 103, 104) being respectively connected to a separate input of said plurality of receivers (105 - 107); **characterized by**
a combiner (109) to correlate signals derived from each of said plurality of receivers (105 - 107) and to outputs signals being correlated with locally generated replicas of the pseudorandom code and carrier of the plurality of signal sources for each of the plurality of vertically-stacked elements (102, 103, 104), and to form a weighted combination of said correlation coefficients based on weights respectively corresponding to each of the plurality of signal sources.

9. The apparatus of claim 8, wherein said plurality of signal sources comprises a plurality of satellites respectively transmitting satellite signals.

10. The apparatus of claim 9, wherein the satellite signals comprise satellite positioning signals and wherein said plurality of satellite signal receivers comprise a plurality of satellite positioning signal receivers and wherein said plurality of digital received satellite signals comprise digital received satellite positioning signals and wherein said data generated by said measurement combiner comprises position data.

11. The apparatus of claim 10, wherein the satellite signals comprise GPS satellite positioning signals and wherein said plurality of satellite signal receivers comprise a plurality of GPS satellite positioning signal receivers and wherein said plurality of digital received satellite signals comprise digital received GPS satellite positioning signals and wherein said data generated by said measurement combiner comprises GPS position data.

12. A method of processing signals from a plurality of signal sources, said method comprising:
receiving the signals from the plurality of signal sources with an antenna array (101) including a plurality of vertically-stacked elements (102, 103, 104);
inputting an output of each of said plurality of vertically-stacked elements (102, 103, 104) to a separate input of a plurality of receivers (105 - 107); **characterized by**
combining outputs of said plurality of receivers (105 - 107) in a combiner (109) to combine signals being correlated with locally generated replicas of the pseudorandom code and carrier using a plurality of combining rules, each of said plurality of combining rules respectively corresponding to one of the plurality of signal sources.

13. The method of claim 12, wherein said outputs of said plurality of receivers (105 - 107) are combined in accordance with minimizing a weighted power output of said antenna array (101) subject to a minimum gain constraint in a direction of each of the plurality of signal sources.

14. The method of claim 12, wherein a gain in said direction of one of the plurality of signal sources transmitting a corresponding signal includes an effect of uncertainty in a response of said antenna array (101).

15. The method of claim 12, wherein said antenna array (101) comprises a plurality of vertically stacked turnstile antennas.

16. The method of claim 12, wherein said plurality of signal sources comprises a plurality of satellites respectively transmitting satellite signals.

17. The method of claim 16, wherein the satellite signals comprise satellite positioning signals and wherein said plurality of receivers (105 - 107) comprise a plurality of satellite positioning signal receivers and wherein said plurality of digital received signals comprise digital received satellite positioning signals and wherein said data generated by said measurement combiner comprises position data.

18. The method of claim17, wherein the satellite signals comprise GPS satellite positioning signals and wherein said plurality of satellite signal receivers comprise a plurality of GPS satellite positioning signal receivers and wherein said plurality of digital received satellite signals comprise digital received GPS satellite positioning signals and wherein said data generated by said measurement combiner comprises GPS position data.

## Patentansprüche

1. Vorrichtung zum Verarbeiten von Signalen von einer Mehrzahl von Signalquellen, wobei die Vorrichtung aufweist:
ein Antennenfeld (101), das eine Mehrzahl von vertikal gestapelten Elementen (102, 103, 104) aufweist, um die Signale von der Mehrzahl von Signalquellen zu empfangen;
eine Mehrzahl von Empfängern (105 - 107), wobei Ausgänge jedes der Mehrzahl von vertikal gestapelten Elementen (102, 103, 104) jeweils mit einem getrennten Eingang der Mehrzahl von Empfängern verbunden ist; **gekennzeichnet durch**
einen Kombinator (109), der mit Ausgängen der Mehrzahl von Empfängern (105 - 107) verbunden ist, um Signale, die mit lokal generierten Nachbildungen des Pseudo-Zufallscodes und des Trägers korreliert sind, unter Verwendung einer Mehrzahl von Kombinierungsregeln zu kombinieren, wobei jede der Mehrzahl von Kombinierungsregeln jeweils zu einer der Mehrzahl von Signalquellen korrespondiert.

2. Vorrichtung gemäß Anspruch 1, wobei der Kombinator (109) die Ausgangssignale der Mehrzahl von Empfängern (105 - 107) gemäß einem Minimieren einer gewichteten Leistungsabgabe des Antennenfelds (101), das einer Anforderung einer minimalen Verstärkung in einer Richtung jeder der Mehrzahl von Signalquellen unterliegt, kombiniert.

3. Vorrichtung gemäß Anspruch 1, wobei eine Verstärkung in der Richtung einer der Mehrzahl von Signalquellen, die ein korrespondierendes Signal sendet, einen Effekt einer Unsicherheit in einer Antwort des Antennenfelds (101) aufweist.

4. Vorrichtung gemäß Anspruch 1, wobei das Antennenfeld (101) eine Mehrzahl von vertikal gestapelten Kreuzdipolantennen aufweist.

5. Vorrichtung gemäß Anspruch 1, wobei die Mehrzahl von Signalquellen eine Mehrzahl von Satelliten aufweist, die jeweils Satellitensignale senden.

6. Vorrichtung gemäß Anspruch 5, wobei die Satellitensignale Satellitenpositionierungssignale aufweisen, und wobei die Mehrzahl von Empfängern (105 - 107) eine Mehrzahl von Satellitenpositionierungssignalempfängern aufweist, und wobei die Mehrzahl von digitalen, empfangenen Signalen digitale, empfangene Satellitenpositionierungssignale aufweist, und wobei die Daten, die durch den Messkombinator generiert werden, Positionsdaten aufweisen.

7. Vorrichtung gemäß Anspruch 6, wobei die Satellitensignale GPS-Satellitenpositionierungssignale aufweisen, und wobei die Mehrzahl von Satellitensignalempfängern eine Mehrzahl von GPS-Satellitenpositionierungssignalempfängern aufweist, und wobei die Mehrzahl von digitalen, empfangenen Satellitensignalen digitale, empfangene GPS-Satellitenpositionierungssignale aufweist, und wobei die Daten, die durch den Messkombinator generiert werden, GPS-Positionsdaten aufweisen.

8. Vorrichtung zum Verarbeiten von Signalen von einer Mehrzahl von Signalquellen, wobei die Vorrichtung aufweist:
ein Antennenfeld (101), das eine Mehrzahl von vertikal gestapelten Elementen (102, 103, 104) aufweist;
eine Mehrzahl von Empfängern (105 - 107), wobei Ausgänge jedes der Mehrzahl von vertikal gestapelten Elementen (102, 103, 104) jeweils mit einem getrennten Eingang der Mehrzahl von Empfängern (105 - 107) verbunden ist; **gekennzeichnet durch**
einen Kombinator (109), um Signale zu korrelieren, die von jedem der Mehrzahl von Empfängern (105 - 107) hergeleitet sind, und um Signale auszugeben, die mit lokal generierten Nachbildungen des Pseudo-Zufallscodes und des Trägers der Mehrzahl von Signalquellen für jedes der Mehrzahl von vertikal gestapelten Elemente (102, 103, 104) korreliert sind, und um eine gewichtete Kombination der Korrelationskoeffizienten basierend auf Gewichten zu bilden, die jeweils zu jeder der Mehrzahl von Signalquellen korrespondieren.

9. Vorrichtung gemäß Anspruch 8, wobei die Mehrzahl von Signalquellen eine Mehrzahl von Satelliten aufweist, die jeweils Satellitensignale senden.

10. Vorrichtung gemäß Anspruch 9, wobei die Satellitensignale Satellitenpositionierungssignale aufweisen, und wobei die Mehrzahl von Satellitensignalempfängern eine Mehrzahl von Satellitenpositionierungssignalempfängern aufweist, und wobei die Mehrzahl von digitalen, empfangenen Satellitensignalen digitale, empfangene Satellitenpositionierungssignale aufweist, und wobei die Daten, die durch den Messkombinator generiert werden, Positionsdaten aufweisen

11. Vorrichtung gemäß Anspruch 10, wobei die Satellitensignale GPS-Satellitenpositionierungssignale aufweisen, und wobei die Mehrzahl von Satellitensignalempfängern eine Mehrzahl von GPS-Satellitenpositionierungssignalempfängern aufweist, und wobei die Mehrzahl von digitalen, empfangenen Satellitensignalen digitale, empfangene GPS-Satellitenpositionierungssignale aufweist, und wobei die Daten, die durch den Messkombinator generiert werden, GPS-Positionsdaten aufweisen.

12. Verfahren zum Verarbeiten von Signalen von einer Mehrzahl von Signalquellen, wobei das Verfahren aufweist:
Empfangen der Signale von der Mehrzahl von Signalquellen mit einem Antennenfeld (101), das eine Mehrzahl von vertikal gestapelten Elementen (102, 103, 104) aufweist;
Eingeben eines Ausgangssignals jedes der Mehrzahl von vertikal gestapelten Elementen (102, 103, 104) an einen getrennten Eingang einer Mehrzahl von Empfängern (105 - 107); **gekennzeichnet durch**
Kombinieren von Ausgangssignalen der Mehrzahl von Empfängern (105 - 107) in einem Kombinator (109), um Signale, die mit lokal generierten Nachbildungen des Pseudo-Zufallscodes und des Trägers korreliert sind, unter Verwendung einer Mehrzahl von Kombinierungsregeln zu kombinieren, wobei jede der Mehrzahl von Kombinierungsregeln jeweils zu einer der Mehrzahl von Signalquellen korrespondiert.

13. Verfahren gemäß Anspruch 12, wobei die Ausgangssignale der Mehrzahl von Empfängern (105 - 107) gemäß einem Minimieren einer gewichteten Leistungsabgabe des Antennenfelds (101), das einer Anforderung einer minimalen Verstärkung in einer Richtung jeder der Mehrzahl von Signalquellen unterliegt, kombiniert werden.

14. Verfahren gemäß Anspruch 12, wobei eine Verstärkung in der Richtung einer der Mehrzahl von Signalquellen, die ein korrespondierendes Signal sendet, einen Effekt einer Unsicherheit in einer Antwort des Antennenfelds (101) aufweist.

15. Verfahren gemäß Anspruch 12, wobei das Antennenfeld (101) eine Mehrzahl von vertikal gestapelten Kreuzdipolantennen aufweist.

16. Verfahren gemäß Anspruch 12, wobei die Mehrzahl von Signalquellen eine Mehrzahl von Satelliten aufweist, die jeweils Satellitensignale senden.

17. Verfahren gemäß Anspruch 16, wobei die Satellitensignale Satellitenpositionierungssignale aufweisen, und wobei die Mehrzahl von Empfängern (105 - 107) eine Mehrzahl von Satellitenpositionierungssignalempfängern aufweist, und wobei die Mehrzahl von digitalen, empfangenen Signalen digitale, empfangene Satellitenpositionierungssignale aufweist, und wobei die Daten, die durch den Messkombinator generiert werden, Positionsdaten aufweisen.

18. Verfahren gemäß Anspruch 17, wobei die Satellitensignale GPS-Satellitenpositionierungssignale aufweisen, und wobei die Mehrzahl von Satellitensignalempfängern eine Mehrzahl von GPS-Satellitenpositionierungssignalempfängern aufweist, und wobei die Mehrzahl von digitalen, empfangenen Satellitensignalen digitale, empfangene GPS-Satellitenpositionierungssignale aufweist, und wobei die Daten, die durch den Messkombinator generiert werden, GPS-Positionsdaten aufweisen.

## Revendications

1. Appareil pour traitement de signaux provenant d'une pluralité de sources de signaux, ledit appareil comprenant :
un réseau d'antennes (101) comportant une pluralité d'éléments empilés verticalement (102, 103, 104) pour recevoir les signaux provenant de la pluralité de sources de signaux ;
une pluralité de récepteurs (105 - 107), les sorties de chacun de ladite pluralité d'éléments empilés verticalement (102, 103, 104) étant respectivement reliées à une entrée séparée de ladite pluralité de récepteurs (105 - 107); **caractérisé par**
un combineur (109) relié aux sorties de ladite pluralité de récepteurs (105 - 107) pour combiner des signaux étant corrélés à des répliques générées localement du code et de la porteuse pseudo-aléatoires en utilisant une pluralité de règles de combinaison, chacune de ladite pluralité de règles de combinaison correspondant respectivement à l'une de la pluralité de sources de signaux.

2. Appareil de la revendication 1, dans lequel ledit combineur (109) combine lesdites sorties de ladite pluralité de récepteurs (105 - 107) conformément à la minimisation d'une sortie de puissance pondérée dudit réseau d'antennes (101) soumis à une contrainte de gain minimal dans une direction de chacune de la pluralité de sources de signaux.

3. Appareil de la revendication 1, dans lequel un gain dans ladite direction de l'une de la pluralité de sources de signaux transmettant un signal correspondant comporte un effet d'incertitude dans une réponse dudit réseau d'antennes (101).

4. Appareil de la revendication 1, dans lequel ledit réseau d'antennes (101) comprend une pluralité d'antennes en tourniquet empilées verticalement.

5. Appareil de la revendication 1, dans lequel ladite pluralité de sources de signaux comprend une pluralité de satellites transmettant respectivement des signaux de satellites.

6. Appareil de la revendication 5, dans lequel les signaux de satellites comprennent des signaux de positionnement par satellites et dans lequel ladite pluralité de récepteurs (105 - 107) comprend une pluralité de récepteurs de signaux de positionnement par satellites et dans lequel ladite pluralité de signaux numériques reçus comprend des signaux numériques reçus de positionnement par satellites et dans lequel lesdites données générées par ledit combineur de mesure comprennent des données de position.

7. Appareil de la revendication 6, dans lequel les signaux de satellites comprennent des signaux de positionnement par satellites GPS et dans lequel ladite pluralité de récepteurs de signaux de satellites comprend une pluralité de récepteurs de signaux de positionnement par satellites GPS et dans lequel ladite pluralité de signaux de satellites numériques reçus comprend des signaux numériques reçus de positionnement par satellites GPS et dans lequel lesdites données générées par ledit combineur de mesure comprennent des données de position GPS.

8. Appareil pour traitement de signaux provenant d'une pluralité de sources de signaux, ledit appareil comprenant :
un réseau d'antennes (101) comportant une pluralité d'éléments empilés verticalement (102, 103, 104) ;
une pluralité de récepteurs (105 - 107), les sorties de chacun de ladite pluralité d'éléments empilés verticalement (102, 103, 104) étant respectivement reliées à une entrée séparée de ladite pluralité de récepteurs (105 - 107); **caractérisé par**
un combineur (109) pour corréler des signaux dérivés de chacun de ladite pluralité de récepteurs (105 - 107) et pour délivrer en sortie des signaux étant corrélés à des répliques générées localement du code et de la porteuse pseudo-aléatoires de la pluralité de sources de signaux pour chacun de la pluralité d'éléments empilés verticalement (102, 103, 104), et pour former une combinaison pondérée desdits coefficients de corrélation sur la base de poids correspondant respectivement à chacune de la pluralité de sources de signaux.

9. Appareil de la revendication 8, dans lequel ladite pluralité de sources de signaux comprend une pluralité de satellites transmettant respectivement des signaux de satellites.

10. Appareil de la revendication 9, dans lequel les signaux de satellites comprennent des signaux de positionnement par satellites et dans lequel ladite pluralité de récepteurs de signaux de satellites comprend une pluralité de récepteurs de signaux de positionnement par satellites et dans lequel ladite pluralité de signaux de satellites numériques reçus comprend des signaux numériques reçus de positionnement par satellites et dans lequel lesdites données générées par ledit combineur de mesure comprennent des données de position.

11. Appareil de la revendication 10, dans lequel les signaux de satellites comprennent des signaux de positionnement par satellites GPS et dans lequel ladite pluralité de récepteurs de signaux de satellites comprend une pluralité de récepteurs de signaux de positionnement par satellites GPS et dans lequel ladite pluralité de signaux de satellites numériques reçus comprend des signaux numériques reçus de positionnement par satellites GPS et dans lequel lesdites données générées par ledit combineur de mesure comprennent des données de position GPS.

12. Procédé de traitement de signaux provenant d'une pluralité de sources de signaux, ledit procédé comprenant le fait :
de recevoir les signaux provenant de la pluralité de sources de signaux avec un réseau d'antennes (101) comportant une pluralité d'éléments empilés verticalement (102, 103, 104) ;
d'introduire une sortie de chacun de ladite pluralité d'éléments empilés verticalement (102, 103, 104) à une entrée séparée d'une pluralité de récepteurs (105 - 107) ; **caractérisé par** le fait :
de combiner des sorties de ladite pluralité de récepteurs (105 - 107) dans un combineur (109) pour combiner des signaux étant corrélés à des répliques générées localement du code et de la porteuse pseudo-aléatoires en utilisant une pluralité de règles de combinaison, chacune de ladite pluralité de règles de combinaison correspondant respectivement à l'une de la pluralité de sources de signaux.

13. Procédé de la revendication 12, dans lequel lesdites sorties de ladite pluralité de récepteurs (105 - 107) sont combinées conformément à la minimisation d'une sortie de puissance pondérée dudit réseau d'antennes (101) soumis à une contrainte de gain minimal dans une direction de chacune de la pluralité de sources de signaux.

14. Procédé de la revendication 12, dans lequel un gain dans ladite direction de l'une de la pluralité de sources de signaux transmettant un signal correspondant comporte un effet d'incertitude dans une réponse dudit réseau d'antennes (101).

15. Procédé de la revendication 12, dans lequel ledit réseau d'antennes (101) comprend une pluralité d'antennes en tourniquet empilées verticalement.

16. Procédé de la revendication 12, dans lequel ladite pluralité de sources de signaux comprend une pluralité de satellites transmettant respectivement des signaux satellites.

17. Procédé de la revendication 16, dans lequel les signaux de satellites comprennent des signaux de positionnement par satellites et dans lequel ladite pluralité de récepteurs (105 - 107) comprend une pluralité de récepteurs de signaux de positionnement par satellites et dans lequel ladite pluralité de signaux numériques reçus comprend des signaux numériques reçus de positionnement par satellites et dans lequel lesdites données générées par ledit combineur de mesure comprennent des données de position.

18. Procédé de la revendication 17, dans lequel les signaux de satellites comprennent des signaux de positionnement par satellites GPS et dans lequel ladite pluralité de récepteurs de signaux de satellites comprend une pluralité de récepteurs de signaux de positionnement par satellites GPS et dans lequel ladite pluralité de signaux de satellites numériques reçus comprend des signaux numériques reçus de positionnement par satellites GPS et dans lequel lesdites données générées par ledit combineur de mesure comprennent des données de position GPS.
